# EUROPÄISCHE PATENTSCHRIFT

(11) **EP 0 395 929 B1**
(45) Veröffentlichungstag und Bekanntmachung des Hinweises auf die Patenterteilung: **14.07.1993**
(21) Anmeldenummer: 90107185.2
(22) Anmeldetag: 14.04.1990
(51) Int. Cl.: E04F 13/08, F16B 31/02

(54) **Halter für eine Tragschiene einer Wand- oder Deckenverkleidung**
Supporting bar for a carrying rail of a wall-or ceiling covering
Barre de support pour rail porteur d'une couverture de mur ou de plafond

(30) Priorität: 29.04.1989 DE 8905451 U
(43) Veröffentlichungstag der Anmeldung: 07.11.1990
(73) Patentinhaber: BWM Dübel + Montagetechnik GmbH, D-70771 Leinfelden-Echterdingen (DE)
(72) Erfinder: Keune, Hans-Joachim, D-5870 Hemer (DE); Weiant, Dirk, D-6690 St. Wendel 1 (DE); Reinwarth, Klaus, D-7400 Tübingen (DE)
(74) Vertreter: Schmid, Berthold, Dipl.-Ing.

(56) Entgegenhaltungen:
- EP-A- 0 000 118
- EP-A- 0 025 208
- CA-A- 964 942
- DE-A- 2 806 872
- DE-U- 8 518 381
- FR-A- 2 421 300
- GB-A- 2 120 795
- US-A- 3 343 443

## Beschreibung

Die Erfindung bezieht sich auf einen Halter mit einer Tragschiene zur Befestigung von Wand- oder Deckenverkleidungsplatten, gemäß dem Oberbegriff des Patentanspruchs 1. Ein solcher Halter mit einer Tragschiene ist aus DE-U-8 518 381 bekannt.

Bei diesem bekannten Halter mit Tragschiene weist die Halteschiene in Längsrichtung ihrer parallelen Schenkel verlaufende, nach innen gerichtete sickenartige Wulste auf, während die Tragschiene an in Längsrichtung der Schenkel des Halters verlaufenden Befestigungsflanschen angebrachte Gegenlagerbereiche aufweist, die ebenfalls als Wulste ausgebildet sein können. Dabei wird so vorgegangen, daß letztgenannte Wulste nach innen oder nach außen der Befestigungsflansche der Tragschiene ragen und damit die als Widerlagerbereiche ausgebildeten Wulste der Seitenwände des Halters übergreifen bzw. unter diese geführt werden können, wodurch die Tragschiene in dem Halter kraft-und formschlüssig festgelegt wird. In diesem Zustand erlaubt der bekannte Halter nur noch eine Verschiebung in Längsrichtung der Tragschiene.

Bei Wand- oder Deckenunebenheiten, wo z. B. die Decke nicht genau eben verläuft, stehen die beiden Schenkel des Halters nicht senkrecht zur Deckenfläche. Weil die in den Halter eingreifende Tragschiene zumindest hinsichtlich des eingreifenden Teils etwa gleich breit ist wie der innere Schenkelabstand, verläuft auch die Platten-Anlagefläche der Tragschiene bei schrägstehenden Halterschenkeln nicht parallel zur Deckenfläche, sondern leicht geneigt hierzu. Wenn nun eine Verkleidungsplatte an zwei im seitlichen Abstand einer Wand- oder Decke befestigten Tragschienen anliegt, so steht ihr bei der korrekt montierten Tragschiene in der vorgesehenen Weise eine verhältnismäßig breite Abstützfläche zur Verfügung, während sie sich an der "schrägstehenden" Tragschiene nur linienförmig abstützen kann. Somit erfüllt diese Wand- oder Deckenverkleidung - der Einfachheit halber wird nachstehend lediglich von einer Wandverkleidung gesprochen, obwohl dies nicht einschränkend verstanden werden darf - nicht die Kriterien für eine ordnungsgemäße Montage. Um letztere zu gewährleisten, müßte man die Rückseite des Halters, also im Falle eines U-Querschnitts den U-Mittelsteg, so stark unterlegen, daß die parallelen Halterschenkel senkrecht zur theoretisch korrekten Wandfläche stehen.

Da ein solches Unterlegen nicht immer gewährleistet ist, vielfach unterbleibt und manchmal auch nicht möglich ist, weil geeignetes Material hierzu nicht zur Verfügung steht, sind die geschilderten Nachteile der bekannten Wand- bzw Deckenverkleidungen quasi unvermeidlich.

Die Aufgabe der Erfindung besteht nun darin, einen Halter der eingangs genannten Art zu schaffen, mit dessen Hilfe ein einwandfreies Ausrichten aller für eine Wand- oder Deckenverkleidung benötigter, insbesondere paralleler Tragschienen bei zumindest örtlich nicht vollkommener Wand oder Decke möglich ist.

Zur Lösung dieser Aufgabe wird erfindungsgemäß vorgeschlagen, daß der Halter gemäß dem Oberbegriff des Anspruchs 1 entsprechend dem kennzeichnenden Teil dieses Anspruchs ausgebildet ist.

Dadurch daß, wie erfindungsgemäß vorgeschlagen, die Tragschiene (2) als Hohlprofil ausgebildet ist, von dem zumindest der in dem Halter eingeschobene Teil der Tragschiene etwa rechteckigen Querschnitt hat oder wenigstens zwei parallele, ebene Außenflächen der Flanken aufweist und in Kombination damit der Seitenabstand der beiden Sicken vor dem Einschieben der Tragschiene (2) geringfügig kleiner ist als die Breite der an den Sicken anliegenden Stellen der Flanken der Tragschiene, ist die Tragschienenlängsmittelebene gegenüber den beiden Ebenen der etwa parallelen Schenkel des Halters schräg stellbar.

Die Schrägstellung der Tragschiene bzw. der Tragschienenlängsmittelebene gegenüber den beiden Ebenen der etwa parallelen Schenkel ist über einen Schwenkwinkel nach der einen und der anderen Seite hin möglich, der sich nach der Größe, insbesondere Tiefe der Sikken sowie der anderen Profilausbildungen richtet. Bei den üblichen Profilabmessungen kann man einen Schwenkwinkel nach links und rechts in der Größenordnung von etwa 10° oder mehr erwarten. Hierdurch sind die üblicherweise auftretenden Unebenheiten der Wand oder Decke in der Regel auszugleichen. Es ist nunmehr möglich, die Anlagefläche jeder Tragschiene gegenüber der theoretischen Wand- oder Deckenebene parallel auszurichten, um dadurch ein einwandfreies Anliegen aller Verkleidungsplatten an den Tragschienen zu ermöglichen. Die Verkleidungsplatten müssen nicht unmittelbar an der Tragschiene anliegen. Wie sie im einzelnen an den Tragschienen befestigt sind und welche Zuordnung sie zu den Tragschienen genau haben, hängt von der Ausbildung im einzelnen ah, wobei insoweit keine Abweichungen von den bekannten Konstruktionen vorgesehen sind.

Man kann nach der Montage des oder der Halter an der Wand oder Decke die Tragschiene zunächst zwischen die beiden Schenkel stekken, und sie wird dann klemmend zwischen den beiden Sicken gehalten. Nach dem Ausrichten in vertikaler und senkrecht zur Wand verlaufender Richtung erfolgt anschließend das genaue Ausrichten der Anlagefläche od. dgl. der Tragschiene gegenüber der theoretisch ebenen Wandfläche. Letzteres erreicht man durch ein Verschwenken nach links oder rechts. Anschließend werden dann die Tragschienen und der bzw. jeder Halter mit Hilfe der Verbindungselemente in der ausgerichteten Lage zusammengehalten.

Eine Ausgestaltung der Erfindung besteht darin, daß der Halter, insbesondere an gegenüberliegenden Stellen, mit in Längsabstand angebrachten Bohrungen und/oder Durchbrüchen für jeweils ein Verbindungselement versehen ist. Jedem Durchbruch bzw. jeder Bohrung muß eine Bohrung der Tragschiene zugeordnet sein, um die Verbindung, insbesondere die Schraubverbindung, herstellen zu können. Während Bohrungspaare einen sogenannten Fixpunkt bilden, gewährleisten Durchbrüche im Halter eine Längsverschiebbarkeit des Befestigungselements, welches an dieser Stelle fest mit der Tragschiene verbunden ist. Bei den Durchbrüchen handelt es sich in bevorzugter Weise um Langlöcher, die sich in Längsrichtung der Tragschiene erstrecken und Relativbewegungen der Tragschiene gegenüber dem Halter zulassen, die aus Wärmedehnungen resultieren.

Bei einer bevorzugten Ausführungsform der Erfindung sind die Verbindungselemente als Schrauben ausgebildet, und zwischen den Schraubenkopf und die Sicke ist ein von der Schraube zentrisch in Längsrichtung durchsetztes Zwischenglied geschaltet, das ein balliges, an der Sicke anlegbares Ende und eine vorzugsweise ebene Stützfläche für den Schraubenkopf aufweist. Zweckmäßigerweise besteht das Zwischenglied aus Stahl, um die notwendige Festigkeit zu gewährleisten. Das ballige Ende ist mit einem Radius ausgeführt, der beispielsweise etwa demjenigen der Sicke entsprechen oder kleiner sein kann. Insgesamt muß aber die Gestaltung in diesem Bereich so vorgenommen werden, daß das Zwischenglied etwa um denselben Schwenkwinkel gedreht werden kann wie die Tragschiene. Auf diese Weise kann man eine stets senkrechte Ausrichtung der Schraubenlängsachse gegenüber der an der Sicke anliegenden Fläche der Tragschiene erreichen.

Eine weitere Variante der Erfindung sieht vor, daß zwischen die ebene Stützfläche des Zwischenglieds und den Schraubenkopf ein von einem Hohlzylinder des Zwischenglieds umfaßter Ring aus elastischem Material, insbesondere aus Neoprene, geschaltet ist. Der Innendurchmesser des zylindrischen Teils entspricht in etwa dem Außendurchmesser des elastischen Rings. Der Ringinnendurchmesser entspricht etwa dem Schraubenschaftdurchmesser. Am Ende der Einschraubbewegung der Schraube drückt der Schraubenkopf gegen den elastischen Ring. Weil dieser am Hohlzylinder anliegt, kann er radial nach außen nicht ausweichen, sondern nur nach innen hin. Dies führt dann zu einer Erhöhung der Reibung, welche dem Monteur das Ende des Einschraubens anzeigt oder in geeigneter Weise zur Beendigung des Einschraubens herangezogen werden kann.

Wenn der Hohlzylinder des Zwischenglieds den elastischen Ring in Achsrichtung überragt, so kann auch der Schraubenkopf, zumindest teilweise, noch in den Hohlzylinder eintreten. Im Falle einer Sechskantschraube kann man eine Ausführung verwenden, die am inneren Ende des Sechskantkopfes mit einer vorzugsweise angeformten Ringscheibe ausgestattet ist Statt. dessen oder zusätzlich kann man natürlich zwischen den Schraubenkopf und den elastischen Ring noch eine Unterlegscheibe od. dgl. einsetzen.

Eine besonders bevorzugte Ausführungsform der Erfindung besteht darin, daß der Hohlzylinder bei zusammengepresstem, elastischem Ring letzteren um etwa die Schraubenkopfhöhe überragt. Wenn man diese Schraube mit Hilfe eines motorgetriebenen Schraubers eindreht, der mit einer Nuß od. dgl. ausgestattet ist, welche den Schraubenkopf erfaßt und dadurch das Drehmoment vom Schrauber auf die Schraube überträgt, so läuft diese Nuß od. dgl. gegen den freien Rand des Hohlzylinders, sobald der Kopf etwas in diesen Hohlzylinder eingetreten ist. Bei weiterem Einschrauben tritt der Schraubenkopf immer weiter aus der Nuß od dgl aus, bis er schließlich vollkommen frei kommt. Auf diese Weise verhindert man ein Ausreißen des Gewindes beim maschinellen Eindrehen der Schrauben und gewährleistet eine einwandfreie Schraubenverbindung zwischen Halter und Tragschiene. Die Schraube kann immer nur so weit eingedreht werden, bis ihr Kopf satt am elastischen Ring anliegt und diesen um das vorgesehene Maß zusammenpreßt. Ein Drehen der Schraube gegenüber dem Muttergewinde ohne überlagerte Vorschubbewegung der Schraube, welche das gefürchtete Ausreißen des Muttergewindes bewirkt, wird mit Hilfe dieser vorteilhaften Ausgestaltung vollkommen verhindert.

Zweckmäßigerweise ist die Schraube als selbstschneidene und/oder -bohrende Schraube ausgebildet, so daß man sie durch das Loch oder den Durchbruch des Halters hindurch unmittelbar in die Tragschiene eindrehen kann. Gerade die auf solche Weise entstandenen Muttergewinde sind gegen Ausreißen besonders zu schützen.

Außer dem erwähnten Sechskant- bzw Mehrkantkopf kann die Schraube auch einen anderen Kopf aufweisen und z.B. als sogenannte Innensechskantschraube ausgebildet sein oder zusätzlich einen Innensechskant od. dgl. aufweisen. Diese Schraube läßt sich in gleicher Weise vorteilhaft und sicher gegen Gewindeausreißen mit Hilfe eines motorgetriebenen Schraubers eindrehen. Andererseits gewährleistet der Innensechskant ein verhältnismäßig problemloses Herausdrehen der Schraube ohne Sonderwerkzeug.

Die Erfindung wird nachstehend anhand der Zeichnung näher erläutert. Die Zeichnung zeigt ein Ausführungsbeispiel der Erfindung. Hierbei stellen dar:
- Fig. 1: perspektivisch eine abgebrochene, schematisierte Darstellung eines Halters mit einer darin eingesetzten Tragschiene,
- Fig. 2: in einem Längsschnitt das Verbindungselement mit dem Zwischenglied,
- Fig. 3: perspektifisch das Zwischenglied.

Der Halter 1 für eine Tragschiene 2 wird bei einer Deckenverkleidung an der Decke und bei einer Wandverkleidung an der Wand befestigt. Beim Ausführungsbeispiel handelt es sich um eine Wandverkleidung. Dabei werden in üblicher Weise gleichen Seitenabständen und paralleler Anordnung einer der Wandgröße sowie der Größe der Verkleidungsplatten od. dgl. entsprechende Anzahl von Tragschienen 2 mit Hilfe der Halter 1 montiert. Die Halter können gleich lang sein wie die Tragschienen. Statt dessen kann man aber auch kurze, in Verlängerung voneinander montierte Halter nehmen und jede Tragschiene mit mehreren Haltern indirekt an der Wand oder Decke befestigen. Der Querschnitt der Tragschiene ist von bekannter Art. Es handelt sich dabei insbesondere um ein Hohlprofil, das im Querschnitt keinesfalls rechteckig oder quadratisch sein muß. Zweckmäßigerweise ist aber zumindest der in den Halter eingeschobene Teil der Tragschiene etwa rechteckig oder zumindest mit zwei parallelen Flanken versehen. Jede dieser beiden Flanken 3 und 4 liegt an der konvexen Seite einer Sicke 5 bzw. 6 des Halters 1 an. Jede Sicke befindet sich beim Ausführungsbeispiel am freien Ende je eines Schenkels 7 bzw. 8 des Halters 1. Diese beiden Schenkel verlaufen parallel zueinander, und sie sind beim Ausführungsbeispiel über einen Quersteg 9 miteinander verbunden, so daß insgesamt ein etwa U-förmiger Querschnitt des Halters entsteht. Der Quersteg 8 ist mit nicht dargestellten Bohrungen versehen, die seine Montage an der Wand bzw. Decke ermöglichen.

Der Abstand der beiden Sicken 5 und 6 ist vorzugsweise so gewählt, daß die beiden Schenkel 7 und 8 beim Einschieben der Tragschiene 2 in Pfeilrichtung 10 federelastisch auseinander gehen und sie die Tragschiene klemmend festhalten. Nach dem Ausrichten in Pfeilrichtung 10 sowie im Sinne des Doppelpfeils 11 kann man die Traschiene 2 gegenüber dem oder den Haltern auch noch im Sinne des Doppelpfeils 12 drehen. Beim Ausführungsbeispiel ist ein Drehen von der Mittelstellung aus nach beiden Seiten hin um etwa 10° möglich. Der Drehwinkel hängt allerdings bei ein und derselben Dimensionierung der betreffenden Teile von verschiedenen Faktoren ab, beispielsweise auch davon, wie tief man die Tragschiene 2 in den Halter 1 im Sinne des Pfeils 10 einschiebt. Außer der an sich vorgesehenen mittleren Stellung ist in der Zeichnung auch noch eine der beiden maximalen Schwenkstellungen dargestellt.

Über diese Schwenkbewegung soll erreicht werden, daß die Vorderfläche 13 der Tragschiene 2, welche keineswegs eine einzige durchgehend ebene Fläche sein muß, sondern durch eine gedachte Ebene ersetzt werden kann, parallel zur Wand oder Decke auch dann verläuft, wenn der Quersteg 9 des Halters 1 an einer Stelle der Wand oder Decke anliegt, die nicht in der theoretisch vorgesehenen Wand- oder Deckenfläche liegt. Vorsorglich wird auch noch festgehalten, daß die Wand-oder Deckenverkleidungsplatten keinesfalls unmittelbar an der Tragschiene oder auch mehreren Tragschienen anliegen müssen. Insoweit sind alle üblichen Befestigungen möglich.

Wenn die Tragschiene gegenüber ihrem Halter oder ihren Haltern ausgerichet ist, so wird diese Relativlage mit Hilfe von Verbindungselementen 14 gesichert. Bevorzugterweise handelt es sich dabei um Schrauben. Das Ausführungsbeispiel sieht die Verwendung einer selbstbohrenden und selbstschneidenden Schraube mit Sechskantkopf 15 und angeformter Unterlegscheibe 16 vor.

Diese Schraube durchsetzt ein hohles, grob betrachtet, trichterförmiges Zwischenglied 17 zentrisch. Es besteht im wesentlichen aus einem Hohlzylinder 18 und einen im Durchmesser kleineren Endstück 19, das insgesamt oder zumindest an seinem freien Ende 20 ballig geformt ist. Der Radius ist so gewählt, daß sich das Zwischenglied 17 in der Sicke 5 bzw. 6 um etwa den gleichen Winkel im Sinne des Doppelpfeils 12 verschwenken läßt wie die Tragschiene 2 im Halter 1. Dadurch läßt sich die Längsachse von Zwischenglied und Schraube jeweils senkrecht zur Ebene der Flanke 3 bzw. 4 der Tragschiene 2 ausrichten. In Verbindung mit derartigen Zwischengliedern 17 empfiehlt es sich, die Sicken 5 und 6 wie beim Ausführungsbeispiel im Querschnitt bogenförmig zu wählen. Ein Ausrichten der Tragschiene 7 gegenüber dem oder den Haltern 1 im Sinne des Doppelpfeils 12 ist aber ohne weiteres auch dann möglich, wenn man anstelle des bogenförmigen Querschnitts der Sicken beispielsweise einen V-förmigen, trapezförmigen oder ähnlichen Querschnitt wählt.

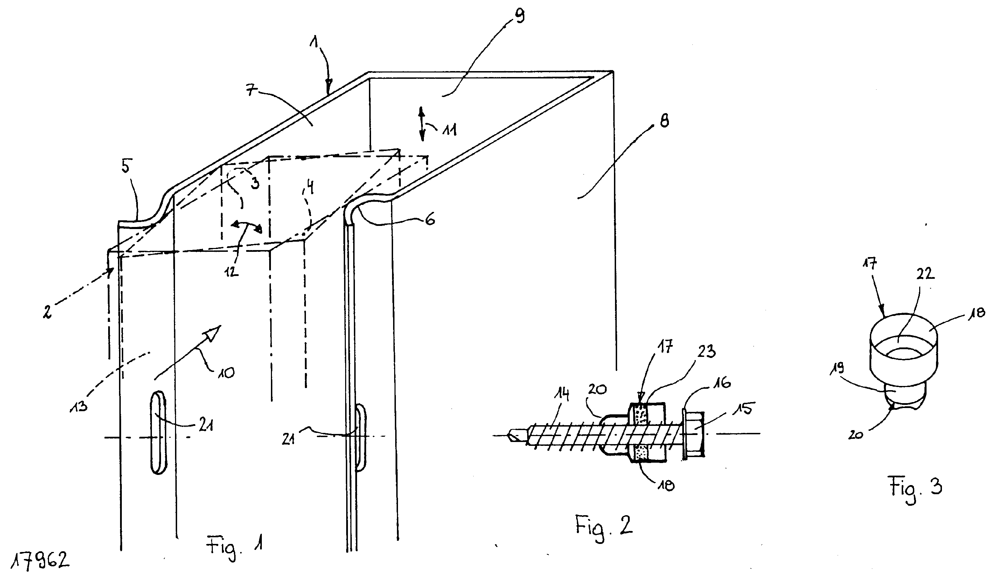

Am Halter 1 sind in Längsrichtung versetzt mehrere Bohrungen oder Durchbrüche 21 angebracht. Jeder wird von einer Schraube durchsetzt, die in ein Gewinde der Tragschiene eingedreht wird. Bei einer selbstbohrenden und selbstgewindeschneidenden Schraube (Fig. 2) ist die Tragschiene 2 bzw. sind ihre Flanken 3 und 4 nicht vorgebohrt.

Am Übergang zwischen dem Hohlzylinder 18 und dem Endstück 19 befindet sich eine ringförmige ebene Stützfläche 22. Darauf liegt ein Ring 23 aus elastischem Material, insbesondere aus Neoprene, auf. Er wird vom Schraubenkopf 15 zusammengepreßt, wenn dieser tief genug eingeschraubt ist. Im übrigen erkennt man aus Fig. 2, daß der Durchmesser des Schraubenkopfes bzw. seiner angeformten Scheibe 16 etwa dem Innendurchmesser des Hohlzylinders 18 und damit auch etwa dem Außendurchmesser des elastischen Rings 23 entspricht.

Die Höhe des Hohlzylinders 19 ist in vorteilhafter Weise so gewählt, daß er bei zusammengepreßtem Ring 18 diesen etwa um die Höhe des Schraubenkopfes 15 überragt. Bei der vorstehend beschriebenen Montage der Schrauben kann man den Hohzylinder 18 auch geringfügig kürzer wählen, weil der Schraubenkopf von der Nuß eines beispielsweise elektrischen Schraubers bereits dann freikommt, wenn er sich weitgehend im Innern des Hohlzylinders 18 befindet. Dies hängt im wesentlichen von der Ausbildung der Mündung der Nuß ab.

## Patentansprüche

1. Halter mit einer Tragschiene (2) zur Befestigung von Wand- oder Deckenverkleidungsplatten, wobei der Halter (1, 2) etwa parallele Schenkel (7, 8) aufweist, zwischen welche die Tragschiene (2) eingreift, die Tragschiene und wenigstens ein Halter (1) mittels Verbindungselementen (14) verbunden sind, jeder Schenkel (7, 8) des Halters (1) mit einer nach innen gerichteten, insbesondere im Querschnitt bogenförmigen Sicke (5, 6) versehen ist, die sich in Längsrichtung der Tragschiene (2) erstreckt und an einer Wand (4, 3), einem Profilsteg od. dgl. der Tragschiene (2) anliegt und wobei die beiden Schenkel (7, 8) des Halters (1) federelastisch auslenkbar sind und der lichte Abstand zwischen den parallelen Schenkeln des Halters (1) größer ist als die Breite des in den Halter (1) eingreifenden Teils der Tragschiene (2), dadurch gekennzeichnet, daß die Tragschiene (2) als Hohlprofil ausgebildet ist, von dem zumindest der in den Halter (1) eingeschobene Teil der Tragschiene (2) etwa rechteckigen Querschnitt oder wenigstens zwei parallele ebene Außenflächen der Flanken aufweist, und daß der Seitenabstand der beiden Sicken (5, 6) vor dem Einschieben der Tragschiene (2) geringfügig kleiner ist als die Breite der an den Sicken anliegenden Stellen der Flanken der Tragschiene (2), so daß die Tragschienenlängsmittelebene gegenüber den beiden Ebenen der etwa parallelen Schenkel (7, 8) des Halters (1) schrägstellbar ist.

2. Halter mit Tragschiene nach Anspruch 1, dadurch gekennzeichnet, daß der Halter (1), insbesondere an gegenüberliegenden Stellen , mit im Längsabstand angebrachten Bohrungen und/oder Durchbrüchen (21) für jeweils ein Verbindungselement (14) versehen ist.

3. Halter mit Tragschiene nach Anspruch 1 oder 2, dadurch gekennzeichnet, daß die Verbindungselemente (14) als Schrauben ausgebildet sind und zwischen den Schraubenkopf (15) und die Sicke (5, 6) ein von der Schraube zentrisch in Längsrichtung durchsetztes Zwischenglied (17) geschaltet ist, das ein balliges, an der Sicke (5, 6) anlegbares Ende (20) und eine vorzugsweise ebene Stützfläche für den Schraubenkopf (15) aufweist.

4. Halter mit Tragschiene nach Anspruch 3, dadurch gekennzeichnet, daß zwischen die ebene Stützfläche (22) des Zwischenglieds (17) und den Schraubenkopf (15) ein von einem Hohlzylinder (18) des Zwischenglieds (17) umfaßter Ring (23) aus elastischem Material, insbesondere aus Neoprene, geschaltet ist.

5. Halter mit Tragschiene nach Anspruch 4, dadurch gekennzeichnet, daß der Hohlzylinder (18) des Zwischenglieds (17) den elastischen Ring (23 in Achsrichtung überragt.

6. Halter mit Tragschiene nach Anspruch 5, dadurch gekennzeichnet, daß der Hohlzylinder (18) bei zusammengepresstem elastischem Ring (23) letzteren um etwa die Schraubenkopfhöhe überragt.

7. Halter mit Tragschiene nach wenigstens einem der vorhergehenden Ansprüche, dadurch gekennzeichnet, daß die Schraube (14) als selbstschneidende und/oder selbstbohrende Schraube ausgebildet ist.

## Claims

1. Holder with a carrier rail (2) for securing wall or ceiling panelling, wherein the holder (1, 2) comprises approximately parallel legs (7, 8) between which the carrier rail (2) engages, the carrier rail and at least one holder (1) being connected by means of connecting elements (14), each leg (7, 8) of the holder (1) being provided with an inwardly facing bead (5, 6) which is in particular arcuate in cross-section, extends in the longitudinal direction of the carrier rail (2), and abuts a wall (4, 3) of a profiled bar or the like of the carrier rail (2), and wherein the two legs (7, 8) of the holder (1) can be deflected resiliently and the internal distance between the parallel legs of the holder (1) is larger than the width of the part of the carrier rail (2) engaging in the holder (1), characterised in that the carrier rail (2) is in the form of a hollow profiled section of which at least the part inserted in the holder (1) has an approximately rectangular cross-section or at least two parallel flat outer surfaces of the flanks; and in that the lateral distance between the two beads (5, 6) before the carrier rail (2) is inserted is slightly smaller than the width between the points of the flanks of the carrier rail (2) abutting the beads, such that the longitudinal centre plane of the carrier rail can be inclined relative to the two planes of the approximately parallel legs (7, 8) of the holder (1).

2. Holder with a carrier rail according to Claim 1, characterised in that the holder (1) is provided, in particular at opposite locations, with bores and/or apertures (21) provided at a longitudinal spacing for one connecting element (14) in each case.

3. Holder with a carrier rail according to Claim 1 or 2, characterised in that the connecting elements (14) are in the form of screws, and there is engaged between the screw head (15) and the bead (5, 6) an intermediate member (17) through which the screw penetrates centrally in a longitudinal direction and which comprises a spherical end (20) which can be applied against the bead (5, 6) and a support surface, which is preferably flat, for the screw head (15).

4. Holder with a carrier rail according to Claim 3, characterised in that there is engaged between the flat support surface (22) of the intermediate member (17) and the screw head (15) a ring (23) of resilient material, in particular neoprene, which is surrounded by a hollow cylinder (18) of the intermediate member (17).

5. Holder with a carrier rail according to Claim 4, characterised in that the hollow cylinder (18) of the intermediate member (17) projects above the resilient ring (23) in the axial direction.

6. Holder with a carrier rail according to Claim 5, characterised in that the hollow cylinder (18) projects above the resilient ring (23) by approximately the height of the screw head when the said ring is compressed.

7. Holder with a carrier rail according to at least one of the preceding claims, characterised in that the screw (14) is in the form of a self-tapping and/or self-boring screw.

## Revendications

1. Support avec un rail porteur (1) pour la fixation de plaques de revêtement de mur ou de plafond, support (1) qui comporte des ailes (7, 8) à peu près parallèles, entre lesquelles vient se placer le rail porteur (2), le rail porteur et au moins un support (1) étant reliés entre eux au moyen d'éléments d'assemblage (14), chaque aile (7, 8) du support (1) étant pourvue d'une moulure (5, 6) dirigée vers l'intérieur, ayant en particulier une forme arquée en section droite, qui s'étend dans la direction longitudinale du rail porteur (2) et s'applique contre une paroi (4, 3), une nervure de profilé ou analogue du rail porteur (2) et les deux ailes (7, 8) du support (1) étant susceptibles d'être mutuellement écartées élastiquement, l'espacement libre entre les ailes parallèles du support (1) étant plus grand que la largeur de la partie du rail porteur (2) pénétrant dans le support (1), caractérisés en ce que le rail porteur (2) est réalisé comme un profilé creux dont au moins la partie glissée dans le support (1) possède une section droite à peu près rectangulaire ou présente au moins deux faces extérieures planes et parallèles sur les flancs, et que l'espacement latéral des deux moulures (5, 6) est légèrement plus petit, avant l'introduction du rail porteur (2), que la largeur des endroits des flancs du rail porteur (2) appliqués contre les moulures, de sorte que le plan médian longitudinal du rail porteur est inclinable par rapport aux deux plans des ailes à peu près parallèles (7, 8) du support (1).

2. Support avec rail porteur selon la revendication 1, caractérisés en ce que le support (1) est pourvu, en particulier à des endroits mutuellement opposés, de perçages et/ou ajours (21) ménagés à intervalles dans le sens de la longueur et servant chaque fois à un élément d'assemblage (14).

3. Support avec rail porteur selon la revendication 1 ou 2, caractérisés en ce que les éléments d'assemblage (14) sont des vis et une pièce intermédiaire (17) est placée entre la tête (15) de la vis et la moulure (5, 6), pièce intermédiaire qui est traversée longitudinalement et au centre par la vis et qui présente une extrémité bombée (20) applicable contre la moulure (5, 6) et une surface d'appui, de préférence plane, pour la tête (15) de la vis.

4. Support avec rail porteur selon la revendication 3, caractérisés en ce qu'une bague (23) en matériau élastique, en particulier en polychloroprène, est interposée entre la surface d'appui plane (22) de la pièce intermédiaire (17) et la tête de vis (15), bague qui est entourée par un cylindre creux (18) de la pièce intermédiaire (17).

5. Support avec rail porteur selon la revendication 4, caractérisés en ce que le cylindre creux (18) de la pièce intermédiaire (17) dépasse de la bague élastique (23) en direction axiale.

6. Support avec rail porteur selon la revendication 5, caractérisés en ce que le cylindre creux (18) dépasse de la bague élastique (23), lorsque celle-ci est comprimée, d'environ la hauteur de la tête de vis.

7. Support avec rail porteur selon au moins une des revendications précédentes, caractérisés en ce que la vis (14) est une vis taraudeuse et/ou perceuse.
